# EUROPÄISCHE PATENTSCHRIFT

(11) **EP 2 151 652 B1**
(45) Veröffentlichungstag und Bekanntmachung des Hinweises auf die Patenterteilung: **13.03.2013**
(21) Anmeldenummer: 09009252.9
(22) Anmeldetag: 16.07.2009
(51) Int. Cl.: F28D 7/10, F28F 9/18, F28F 9/02, C10G 9/00, C10G 9/18, C10G 9/20, F16L 59/20

(54) **Verbindungsstück zwischen einem Spaltrohr und einem Kühlrohr sowie ein Verfahren zum Verbinden eines Spaltrohres mit einem Kühlrohr**
Connecting piece between a cracking tube and a cooling tube and method for connecting a cracking tube with a cooling tube
Pièce de connexion entre un tuyau de séparation et un tuyau de refroidissement ainsi que procédé de connexion d'un tuyau de séparation et d'un tuyau de refroidissement

(30) Priorität: 08.08.2008 DE 102008036955
(43) Veröffentlichungstag der Anmeldung: 10.02.2010
(73) Patentinhaber: Borsig GmbH, 13507 Berlin (DE)
(72) Erfinder: Birk, Carsten, Dipl.-Ing., 16548 Glienicke (DE)
(74) Vertreter: Radünz, Ingo

(56) Entgegenhaltungen:
- EP-B1- 0 718 579
- FR-A- 1 590 170

## Beschreibung

Die Erfindung betrifft ein Verbindungsstück zwischen einem Spaltrohr eines Spaltofens und einem Kühlrohr eines Spaltgaskühlers mit den Merkmalen des Oberbegriffes des Anspruches 1 sowie ein Verfahren zum Verbinden eines Spaltrohres eines Spaltofens und mit einem Kühlrohr eines Spaltgaskühlers.

Die Pyrolyse- oder Ethylen-Spaltöfen bilden innerhalb der Ethylenanlage das Schlüsselelement zur Herstellung der Grundstoffe Ethylen, Propylen, Butadien, etc. für die Kunststoff-Industrie.

Als Ausgangsstoffe werden gesättigte Kohlenwasserstoffe, hauptsächlich Ethan, Propan, Butan, LNG, Naphtha und Gasöl verwendet. Die Umwandlung der gesättigten in die ungesättigten Kohlenwasserstoffe findet in Spaltrohren statt, bei Eintrittstemperaturen von 500 - 680°C und Austrittstemperaturen von 775 - 875°C und in einem Druckbereich von 1,5 - 5 bar.

In nachgeschalteten Spaltgaskühlern am Ofenaustritt werden die ungesättigten Kohlenwasserstoffe (auch Spaltgase genannt) von 775 - 875°C unter Bildung von Hoch- oder Niederdruckdampf auf etwa 350 - 450 °C abgekühlt. Das "Kühlwasser" weist hierbei Siedetemperatur bei einem entsprechendem Druck auf. Die Kühlung findet aufgrund des Phasenüberganges von flüssig nach dampfförmig statt.

Der Spaltgaskühler besteht aus einem oder mehreren Doppelrohren, wobei sich im Innenrohr das abzukühlende Spaltgas befindet und im Außenrohr, also um das Innenrohr herum, das Kühlwasser. Das Spaltgas kann je nach Ofentyp von unten in den Spaltgaskühler eintreten und nach oben strömen oder von oben eintreten und nach unten strömen.

Das gekühlte Doppelrohr des Spaltgaskühlers ist mit einem besonderen Übergangstück mit dem aus dem Spaltofen herausragenden Spaltrohr verbunden. Dieses Übergangsstück wird entweder mit Dampf gekühlt oder als ungekühltes Bauteil ausgelegt, welches mit wärmeisolierendem Material gefüllt ist. Ein solches ungekühltes Übergangsstück ist aus der DE 39 10 630 C3 bekannt und besteht aus einem erweiterten, gabelförmig ausgebildete Rohrende mit einem Innenabschnitt und einem Außenabschnitt. Der zwischen beiden Abschnitten vorhandene Raum ist mit einem wärmeisolierenden Material gefüllt. Lediglich der Außenabschnitt des Übergangsstückes ist mit dem Spaltgaskühler verbunden, während zwischen dem Innenabschnitt des Übergangsstückes und dem Kühlrohr des Spaltgaskühlers ein Spiel in radialer und axialer Richtung eingehalten ist.

Das aus DE 39 10 630 C3 bekannte ungekühlte Übergangsstück weist gegenüber dem gekühlten Übergangsstück den Vorteil auf, dass an der Verbindungsstelle die Wandtemperaturen nahezu gleich sind, so dass thermische Spannungen vermieden werden. Trotz dieses deutlichen Vorteils sind in älteren Spaltgasanlagen gekühlte Übergangsstücke noch im Einsatz. Es besteht ein Bedarf, in den vorhandenen Spaltgasanlagen die vorhandenen gekühlten Übergangsstücke durch ungekühlte Übergangsstücke zu ersetzen.

Aus der EP 718 579 B1 und EP 810 414 B1 ist ein Einzelrohr-Wärmetauscher zur Kühlung von Spaltgas bekannt, der mit einer besonderen Zuführungskammer für das Kühlmedium versehen ist. Die Zuführungskammer besteht aus einzelnen miteinander verbundenen Abschnitten eines massiven streifenförmigen Stückes, in die jeweils eine einzige, das Innenrohr umgebende Vertiefung eingebracht ist. Das Innenrohr des als Doppelrohr ausgebildeten Kühlrohres ist in den Boden der Zuführungskammer eingeschweißt, während das Außenrohr des Doppelrohres an den außerhalb der Vertiefung liegenden Teil der Zuführungskammer angeschweißt ist. Die Verbindung zu dem Spaltofen erfolgt auch bei diesem Wärmetauscher über ein ungekühltes, wärmeisolierendes Material enthaltendes und mit einer gabelförmigen Erweiterung versehenes Übergangsstück. Bei diesem Wärmetauscher lässt sich jedes Kühlrohr einzeln und gezielt ansteuern, und die Zuführungskammer ist in sich steif genug, um ohne zusätzliche Verstärkungen dem hohen Druck des Kühlmediums standzuhalten. Eine tangentiale Zuführung des Kühlmittels erzeugt eine rotierende Kühlmittelströmung, die für eine gute Kühlung des Bodens der Zuführungskammer sorgt und einer unerwünschte Ablagerung von Partikeln aus dem Kühlmedium entgegenwirkt.

Der Erfindung liegt die Aufgabe zugrunde, ein Verbindungsstück hoher Präzision zu schaffen, das nachträglich in bestehende Anlagen vor Ort mit verringertem Aufwand zwischen einem ungekühlten Spaltrohr eines Spaltofens und einem gekühlten Rohr eines Spaltgaskühlers eingesetzt werden kann.

Die Aufgabe wird bei einem gattungsgemäßen Verbindungsstück erfindungsgemäß durch die kennzeichnenden Merkmale des Anspruches 1 gelöst. Ein Verfahren unter Verwendung des erfindungsgemäßen Verbindungsstückes ist Gegenstand des Anspruches 4. Vorteilhafte Ausgestaltungen der Erfindung sind in den Unteransprüchen angegeben.

Das erfindungsgemäße zweiteilige Verbindungsstück stellt einen Reparatursatz dar. Die vorgefertigte Einheit enthält außer der Zuführungskammer bereits das Übergangsstück, so dass die kritische, weil hochbelastete Schweißnaht zwischen der Zuführungskammer und dem Übergangsstück mit einer Automatenschweißung in der Werkstatt mit höchster Qualität und Präzision ausgeführt wird. Die Schweißungen vor Ort in der Anlage wie die Verbindung der Halbschalen miteinander und an dem Innenrohr und Außenrohr des Kühlrohres sowie die Verbindung des Übergangsstückes an dem Spaltrohr können als einfachere Handschweißungen ausgeführt werden.

Ein Ausführungsbeispiel der Erfindung ist in der Zeichnung dargestellt und wird im Folgenden näher erläutert. Es zeigen:
- Fig. 1: den Längsschnitt durch ein Verbindungsstück zwischen Spaltrohr und Spaltgaskühler,
- Fig. 2: den Schnitt II - II nach Fig. 1 und
- Fig. 3: den Schnitt III - III nach Fig. 1.

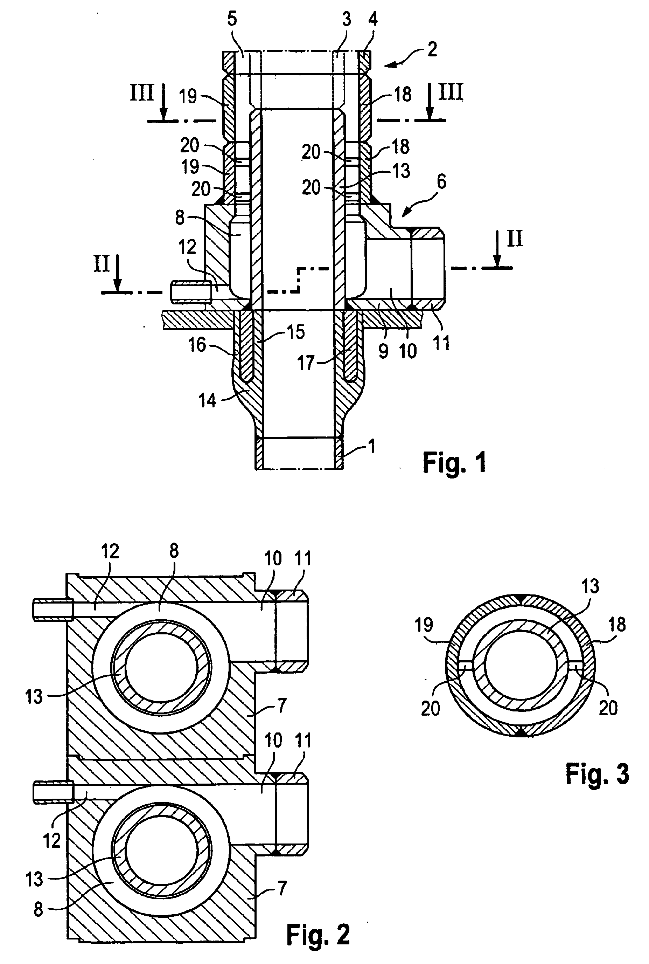

In der Fig. 1 ist ein Verbindungsstück zwischen einem ungekühlten Spaltrohr 1 eines nicht dargestellten Spaltofens und einem Kühlrohr 2 eines Spaltgaskühlers gezeigt. Der Spaltgaskühler, von dem nur der für die Erfindung wesentliche Eingangsteil gezeigt ist, enthält mehrere Kühlrohre 2, die als Doppelrohre mit einem Innenrohr 3 und einem Außenrohr 4 ausgebildet sind. Zwischen dem Innenrohr 3 und dem Außenrohr 4 befindet sich ein Kühlzwischenraum 5, der von einem Kühlmedium hohen Druckes durchströmt ist. Das Außenrohr 4 ist in Bezug auf das Innenrohr 3 zurückgesetzt.

Der Kühlzwischenraum 5 zwischen dem Innenrohr 3 und dem Außenrohr 4 ist an eine Zuführungskammer 6 zur Zuführung des Kühlmediums angeschlossen. Im einzelnen besteht die Zuführungskammer 6 aus einem massiven, streifenförmigen Stück, das in einzelne Abschnitte 7 aufgeteilt ist, die miteinander formschlüssig verbunden sind.

In jedem Abschnitt 7 der Zuführungskammer 6 ist eine im Querschnitt kreisförmige Vertiefung 8 eingearbeitet, der jeweils ein Kühlrohr 2 zugeordnet ist. Die Vertiefung 8 ist so tief in das die Zuführungskammer 6 bildende Stück eingearbeitet, dass ein ringförmiger Boden 9 mit einer für den hohen Innendruck vorbestimmten Restwanddicke verbleibt.

In jede Vertiefung 8 mündet in der Höhe des Bodens 9 vorzugsweise tangential eine Bohrung 10 hinein. Die Bohrungen 10 sind jeweils über einen Zuführungsstutzen 11 mit einer nicht gezeigten Zuführungsleitung für das Kühlmedium verbunden. Das Kühlmedium tritt durch die Bohrung 10 mit hoher Geschwindigkeit in die Vertiefung 8 ein und erzeugt eine rotierende Strömung um das Kühlrohr 2. Diese Strömung sorgt für eine gute Kühlung des Bodens 9 der Vertiefung 8 und verhindert eine Ablagerung von Partikeln auf dem Boden 9. Eine solche Ablagerung führt zu einer schädlichen örtlichen Überhitzung.

Die Vertiefung 8 ist mit einer weiteren Bohrung 12 versehen, die in Höhe des Bodens 9 nach außen geführt ist. Durch die weitere Bohrung 12 können die Partikel, die sich in der Vertiefung 8 angesammelt haben und mit der Strömung des Kühlmediums rotieren, während des Betriebes des Spaltgaskühlers ausgeschleust werden. Außerdem kann durch die Bohrung 12 die Vertiefung 8 und der Boden 9 mit einem Endoskop von außen inspiziert werden.

In den ringförmigen Boden 9 der Zuführungskammer 6 ist ein Innenrohrabschnitt 13 eingeschweißt, dessen Außendurchmesser geringer ist als der Innendurchmesser der Vertiefung 8, so dass innerhalb der Vertiefung 8 ein freier, mit dem Zuführungsstutzen 11 in Verbindung stehender Raum gebildet ist. Der Innendurchmesser, der Außendurchmesser und die Dicke des Innenrohrabschnittes 13 sind den entsprechenden Abmessungen des Innenrohres 3 des Kühlrohres 2 gleich. Der Innenrohrabschnitt 13 ragt aus der Zuführungskammer 6 heraus.

Das austrittsseitige Ende eines jeden Spaltrohres 1 ist mit einem Übergangsstück 14 verbunden. Das Übergangsstück 14 ist gabelförmig aufgeweitet und bildet einen in der Verlängerung des Spaltrohres 1 liegenden Innenabschnitt 15 und einen Außenabschnitt 16, die beide an einem Ende miteinander verbunden sind. Der Außenabschnitt 16 des Übergangsstücks 14 ist an die dem Spaltrohr 1 zugewandten Seite der Zuführungskammer 6 angeschweißt. Der Innenabschnitt 15 des Übergangsstücks 14 steht in einem axialen Abstand von ungefähr einigen Millimetern dem Innenrohrabschnitt 13 gegenüber. Der Zwischenraum zwischen dem Innenabschnitt 15 und dem Außenabschnitt 16 des Übergangsstücks 14 ist mit einer Schicht aus einem wärmeisolierenden Material 17 ausgefüllt.

Der aus der Zuführungskammer 6 herausragende Teil des Innenrohrabschnittes 13 ist von Halbschalen 18, 19 in einem Abstand umschlossen, der der Weite des Kühlzwischenraumes 5 innerhalb des Kühlrohres 2 entspricht. Zur exakten Einhaltung dieses Abstandes sind auf der Außenseite des Innenrohrabschnittes 13 mindestens zwei Abstandshalter 20 angebracht, deren Höhe der Weite des Kühlzwischenraumes 5 innerhalb des Kühlrohres 2 entspricht.

Der Innendurchmesser, der Außendurchmesser und die Dicke der Halbschalen 18, 19 sind den entsprechenden Abmessungen des Außenrohres 4 gleich. Die Halbschalen 18, 19 sind in der Verlängerung des Außenrohres 4 mit diesem sowie miteinander und mit der Zuführungskammer 6 auf deren dem Kühlrohr 2 zugewandten Seite verschweißt. Der Innendurchmesser der Halbschalen 18, 19 entspricht dem Innendurchmesser der Vertiefung 8, wodurch eine Verbindung zwischen der Zuführungskammer 6 und dem Kühlzwischenraum 5 geschaffen ist.

Die Halbschalen 18, 19 und die vorgefertigte Einheit umfassend die Zuführungskammer 6 mit dem angeschweißten Übergangsstück 14 und dem eingeschweißten Innenrohrabschnitt 13 bilden zusammen einen Reparatur-Satz ("Upgrading Set"), der in eine bestehende Anlage eingesetzt werden kann. Dazu wird in der bestehenden Anlage die Zuführungskammer mit dem alten Übergangsstück entfernt, wobei die Innenrohre 3 und die Außenrohre 4 der Kühlrohre 2 so abgetrennt werden, dass - wie in Fig. 1 gezeigt - das Innenrohr 3 aus dem Außenrohr 4 herausragt. Ferner wird das Spaltrohr 1 nahe der Zuführungskammer 6 durchtrennt. Eine weitere Demontage des Spaltgaskühlers ist nicht erforderlich.

Die vorgefertigte Einheit umfassend die Zuführungskammer 6 mit dem angeschweißten Übergangsstück 14 und dem eingeschweißten Innenrohrabschnitt 13 wird mit dem Innenrohrabschnitt 13 an das Innenrohr 3 von Hand angeschweißt. Die Halbschalen 18, 19 werden um den aus der Zuführungskammer 6 herausragende Teil des Innenrohrabschnittes 13 angeordnet und miteinander sowie auf der einen Stirnseite mit dem Außenrohr 4 und auf der anderen Stirnseite mit der dem Kühlrohr 2 zugewandten Seite der Zuführungskammer 6 ebenfalls manuell verschweißt. Anschließend wird das Übergangsstück 14 mit dem Spaltrohr 1 von Hand verschweißt.

Um die genannten Vorteile der beschriebenen Zuführungskammer 6 und des ungekühlten Übergangsstückes 14 bei einem vorhandenen Spaltgaskühler nutzen zu können, ist es nicht erforderlich, den Spaltgaskühler zu demontieren und einen entsprechend ausgerüsteten, neuen Spaltgaskühler zu montieren. Es wird lediglich bei dem vorhandenen und umzustellenden Spaltgaskühler dieser von dem Spaltofen getrennt, die vorhandene Zuführungskammer 6 mit dem alten Übergangsstück sowie ein kleiner Teil des Innenrohres 3 und des Außenrohres 4 entfernt und durch den erfindungsgemäßen Reparatur-Satz ("upgrading Set") ersetzt. Damit wird die Umbauzeit verkürzt, so dass die Anlage schnell und mit verbesserter Technik wieder verfügbar ist.

## Patentansprüche

1. Verbindungsstück zwischen einem Spaltrohr (1) eines Spaltofens und einem Kühlrohr (2) eines Spaltgaskühlers, wobei das Kühlrohr (2) als Doppelrohr mit einem in der Verlängerung des Spaltrohres (1) angeordneten Innenrohr (3) und einem das Innenrohr (3) unter Bildung eines Kühlzwischenraumes (5) umschließenden Außenrohr (4) ausgebildet ist und der Kühlzwischenraum (5) mit einer Zuführungskammer (6) zur Zuführung eines Kühlmediums verbunden ist und wobei mit dem Spaltrohr (1) ein Übergangsstück (14) verbunden ist, dessen Endabschnitt gabelförmig ausgebildet ist und einen Innenabschnitt (15) und einen Außenabschnitt (16) aufweist, zwischen denen eine Schicht aus einem wärmeisolierenden Material (17) eingebracht ist, **dadurch gekennzeichnet, dass** das Verbindungsstück die Zuführungskammer (6), das Übergangstück (14) und Halbschalen (18, 19) umfasst, dass das Verbindungsstück als eine Einheit ausgebildet und vorgefertigt und geeignet ist, die Verbindung zwischen dem Spaltrohr (1) eines Spaltofens und dem Kühlrohr (2) eines Spaltgaskühlers herzustellen, dass der Außenabschnitt (16) des Übergangstückes (14) im Einbauzustand des Verbindungsstückes koaxial zur Längsachse des Kühlrohres (2) an dem Boden (9) der Zuführungskammer (6) befestigt ist, dass in die Zuführungskammer (6) ein Innenrohrabschnitt (13) eingeschweißt ist, der aus der Zuführungskammer (6) herausragt und mit dem Innenabschnitt (15) des Übergangsstückes (14) fluchtet und dessen Dicke und Innen- bzw. Außendurchmesser denen des Innenrohres (3) entsprechen, und dass die Dicke und der Innen- bzw. Außendurchmesser der Halbschalen (18, 19) denen des Außenrohres (4) entsprechen und die axiale Länge der Halbschalen (18, 19) größer ist als der aus der Zuführungskammer (6) herausragende Teil des Innenrohrabschnittes (13).

2. Verbindungsstück nach Anspruch 1, **dadurch gekennzeichnet, dass** der aus der Zuführungskammer (6) herausragende Teil des Innenrohrabschnittes (13) auf der Außenseite mit Abstandshaltern (20) versehen ist, deren Höhe der Weite des Kühlzwischenraumes (5) innerhalb des Kühlrohres (2) entspricht.

3. Verbindungsstück nach Anspruch 1 oder 2, **dadurch gekennzeichnet, dass** die Zuführungskammer (6) aus einem massiven streifenförmigen Stück oder aus mehreren miteinander verbundenen Abschnitten (7) eines massiven streifenförmigen Stückes besteht, in das eine kreisförmige Vertiefung (8) eingebracht ist, die unter Verbleiben eines dünnen Bodens (9) des streifenförmigen Stückes einseitig geschlossen ist, und dass in den Boden (9) der Innenrohrabschnitt (13) eingeschweißt ist.

4. Verfahren zum Verbinden eines Spaltrohres (1) eines Spaltofens mit dem Kühlrohr (2) eines Spaltgaskühlers unter Verwendung des Verbindungsstückes nach Ansprüchen 1 bis 3, **dadurch gekennzeichnet, dass** das Übergangsstück (14) und die Zuführungskammer (6) zu einer Einheit vormontiert werden, dass der Innenrohrabschnitt (13) der Zuführungskammer (6) an das Innenrohr (3) des Kühlrohres (2) angeschweißt wird, dass die Halbschalen (18, 19) um den aus der Zuführungskammer (6) herausragenden Teil des Innenrohrabschnittes (13) angeordnet werden, dass die Halbschalen (18, 19) miteinander und an der einen Stirnseite mit dem Außenrohr (4) des Kühlrohres (2) und mit der anderen Stirnseite mit der Zuführungskammer (6) verschweißt werden und dass das Übergangsstück (14) an das Spaltrohr (1) angeschweißt wird.

## Claims

1. A connecting piece between a cracking tube (1) of a cracking furnace and a cooling tube (2) of a cracking gas cooler, wherein the cooling tube (2) is configured as a double tube having an inner tube (3) arranged in the extension of the cracking tube (1) and an outer tube (4) which encloses the inner tube (3), forming a cooling interspace (5), and the cooling interspace (5) is connected to a feed chamber (6) for feeding a cooling medium and wherein a transition piece (14) is connected to the cracking tube (1), the end section of which transition piece is fork-shaped and has an inner section (15) and an outer section (16), between which a layer consisting of a thermally insulating material (17) is introduced, **characterised in that** the connecting piece comprises the feed chamber (6), the transition piece (14) and half-shells (18, 19), that the connecting piece is formed as one unit and is prefabricated and is suitable for producing the connection between the cracking tube (1) of a cracking furnace and the cooling tube (2) of a cracking gas cooler, that the outer section (16) of the transition piece (14) is fastened to the bottom (9) of the feed chamber (6) coaxially to the longitudinal axis of the cooling tube (2) when the connecting piece is installed, that an inner tube section (13) is welded into the feed chamber (6), which section projects out of the feed chamber (6) and aligns with the inner section (15) of the transition piece (14), and the thickness and inner and outer diameters of which correspond to those of the inner tube (3), and that the thickness and the inner and outer diameters of the half-shells (18, 19) correspond to those of the outer tube (4), and the axial length of the half-shells (18, 19) is greater than the part of the inner tube section (13) which projects out of the feed chamber (6).

2. The connecting piece according to Claim 1, **characterised in that** the part of the inner tube section (13) which projects out of the feed chamber (6) is provided on the outer side with spacers (20), the height of which corresponds to the width of the cooling interspace (5) inside the cooling tube (2).

3. The connecting piece according to Claim 1 or 2, **characterised in that** the feed chamber (6) consists of a solid, strip-shaped piece or of a plurality of sections (7) of a solid, strip-shaped piece which are connected to each other, into which a circular depression (8) is introduced, which is closed on one side, leaving a thin bottom (9) of the strip-shaped piece, and that the inner tube section (13) is welded into the bottom (9).

4. A method for connecting a cracking tube (1) of a cracking furnace to the cooling tube (2) of a cracking gas cooler using the connecting piece according to Claims 1 to 3, **characterised in that** the transition piece (14) and the feed chamber (6)are preassembled to form a unit, that the inner tube section (13) of the feed chamber (6) is welded to the inner tube (3) of the cooling tube (2), that the half-shells (18, 19) are arranged around the part of the inner tube section (13) which projects out of the feed chamber (6), that the half-shells (18, 19) are welded to each other and to the outer tube (4) of the cooling tube (2) at one end and to the feed chamber (6) at the other end, and that the transition piece (14) is welded to the cracking tube (1).

## Revendications

1. Pièce de connexion entre un tuyau de séparation (1) d'un four de séparation et d'un tuyau de refroidissement (2) d'un refroidisseur de gaz de séparation, le tuyau de refroidissement (2) étant constitué comme un tuyau double avec un tuyau intérieur (3) disposé dans la prolongation du tuyau de séparation (1) et un tuyau extérieur (4) enveloppant le tuyau intérieur (3) en formant un compartiment intermédiaire de refroidissement (5) et le compartiment intermédiaire de refroidissement (5) étant raccordé avec une chambre d'alimentation (6) pour alimenter en milieu de refroidissement et une pièce de raccord (14) étant raccordée au tuyau de séparation (1) dont la section finale est conçue en forme de fourche et présente une section intérieure (15) et une section extérieure (16) entre lesquelles est insérée une couche de matériau thermo-isolant **caractérisée en ce que** la pièce de connexion comprend la chambre d'alimentation (6), la pièce de raccord (14) et des demi-coques (18, 19), **en ce que** la pièce de connexion est conçue comme une unité et est préfabriquée et adaptée pour réaliser la connexion entre le tuyau de séparation (1) d'un four de séparation et le tuyau de refroidissement (2) d'un refroidisseur de gaz de séparation, **en ce que** la section extérieure (16) de la pièce de raccord (14) à l'état de montage de la pièce de connexion, est fixée au fond (9) de la chambre d'alimentation (6) de façon coaxiale à l'axe longitudinal du tuyau de refroidissement (2), **en ce que** dans la chambre d'alimentation est soudée une section de tuyau intérieur (13) qui dépasse de la chambre d'alimentation (6) et vient en affleurement avec la section intérieure (15) de la pièce de raccord (14) et dont l'épaisseur et les diamètres intérieur et extérieur correspondent à ceux du tuyau intérieur (3) et **en ce que** l'épaisseur et les diamètres intérieur et extérieur des demi-coques (18,19) correspondent à ceux du tuyau extérieur (4) et la longueur axiale des demi-coques (18, 19) est plus grande que celle de la partie de la section du tuyau intérieur (13) dépassant de la chambre d'alimentation (6).

2. Pièce de connexion selon la revendication 1 **caractérisée en ce que** la partie de la section du tuyau intérieur (13) dépassant de la chambre d'alimentation (6) est munie sur le côté extérieur d'entretoises (20) dont la hauteur correspond à la largeur du compartiment intermédiaire de refroidissement (5) à l'intérieur du tuyau de refroidissement (2).

3. Pièce de connexion selon la revendication 1 ou 2 **caractérisée en ce que** la chambre d'alimentation (6) est composée d'une pièce massive en forme de bande ou de plusieurs sections (7) raccordées entre elles, dans laquelle est aménagé un creux (8) circulaire qui est fermé unilatéralement par maintien d'un fond (9) mince de la pièce en forme de bande et **en ce que** la section de tuyau intérieur (13) est soudée dans le fond (9).

4. Procédé de connexion d'un tuyau de séparation (1) d'un four de séparation avec le tuyau de refroidissement (2) d'un refroidisseur de gaz de séparation en utilisant la pièce de connexion selon les revendications 1 à 3 **caractérisée en ce que** la pièce de raccord (14) et la chambre d'alimentation (6) sont prémontées en une unité, **en ce que** la section de tuyau intérieur (13) de la chambre d'alimentation (6) est soudée au tuyau intérieur (3) du tuyau de refroidissement (2), **en ce que** les demi-coques (18, 19) sont disposées autour de la partie de la section de tuyau intérieur (13), dépassant de la chambre d'alimentation (6), **en ce que** les demi-coques (18, 19) sont soudées entre elles et sur un côté avant avec le tuyau extérieur (4) du tuyau de refroidissement (2) et sur l'autre côté avant avec la chambre d'alimentation (6) et **en ce que** la pièce de raccord (14) est soudée au tuyau de séparation (1).
